# EUROPEAN PATENT APPLICATION

(11) **EP 2 161 572 A2**
(43) Date of publication of application: **10.03.2010**
(21) Application number: 09168983.6
(22) Date of filing: 28.08.2009
(51) Int. Cl.: G01N 29/02, G01N 29/24, G01N 29/30, G01N 29/34

(54) **Method and apparatus for low drift chemical sensor array**

(30) Priority: 09.09.2008 US 207217
(71) Applicant: Honeywell International Inc., Morristown, NJ 07962 (US)
(72) Inventor: Cobianu, Cornel, 061672, Bucharest (RO); Georgescu, Ion, Bucharest (RO)
(74) Representative: Buckley, Guy Julian

(57) **Abstract**

An on-chip low baseline drift SAW/LAW chemical sensor array and method of forming the same. A dual SAW delay line includes a common IDT for generating an acoustic wave and a pair of IDT for reception of the acoustic wave. One sensing layer or one reference layer can be deposited in position on each side of the common IDT. An ASIC chip includes on chip dual operational amplifiers and a mixer in order to obtain a differential measurement utilizing a difference being given by the sensing and the reference layers. A 3D technology can be employed in order to connect the sensor array and the ASIC in the same package and thereby form a 3D stack. The chemical sensor array and the ASIC can be configured in different packages and interconnected on the same substrate utilizing 2D technologies. A number of gases can be detected independently, and each gas can be detected differentially, with respect to its associated sensing layer and specific reference layer.

## Description

### TECHNICAL FIELD

Embodiments are generally related to sensor methods and systems. Embodiments are also related to SAW (Surface Acoustic Wave) and LAW (Love Acoustic Wave) chemical sensor devices. Embodiments are additionally related to methods for fabricating SAW chemical sensor arrays.

### BACKGROUND OF THE INVENTION

Chemical sensors can be utilized to convert chemical signals=(e.g., concentration, activity, partial pressure, etc.) into a measurable electrical signal. Among the conventional, commercial solid-state chemical sensors, the most well-known are pellistors and chemo-resistors. Such solid-state chemical sensors are resistive-type sensors and typically need to be heated at a high temperature in order to show gas sensitivity. Pellistors can be utilized for detection of reducing gases such as, for example, CH₄. A typical pellistor includes a platinum electrical resistance component covered with a porous ceramic material incorporating noble metal atoms within for catalyzing a gas oxidation reaction at the pellistor surface. In the presence of CH₄, the heated pellistor further increases its temperature due to exothermic gas decomposition. Such an approach results in an increase in temperature, which in turn can be articulated as a platinum resistance increase.

Chemo-resistor sensors usually include a metal oxide (e.g., SnO₂) that detects an oxidant gas (e.g., NOₓ) by increasing its electrical resistance and a reducing gas (e.g., CO) by decreasing its electrical resistance. Such conventional solid-state chemical sensors utilize high electrical power and present cross sensitivity with respect to other gases in an ambient configuration. Hence, it is believed that a SAW/LAW chemical sensor that utilizes less electrical power for effective gas detection can be utilized as an alternative to such prior art solid-state chemical sensors. Note that "LAW" refers generally to "Love Acoustic Wave" or "Love mode Acoustic Wave".

A SAW/LAW chemical sensor with a functional sensing layer can be utilized for selective detection of gas at room temperature. SAW/LAW chemical sensors rely on interdigital (IDT) transducers to generate and detect an acoustic wave that travels from one end of the device to the other. When a gas is absorbed on the sensing layer, there occurs a change in acoustic wave propagation velocity and also a change in visco-elastic properties of the film due to the increased mass of the sensing layer. One problem associated with such prior art SAW/LAW chemical sensors with functionalized sensing layers is the absence of the control of baseline drift during its operation due to the aging of the sensing material and physio-chemical changes in the film caused by humidity and other external agents/conditions.

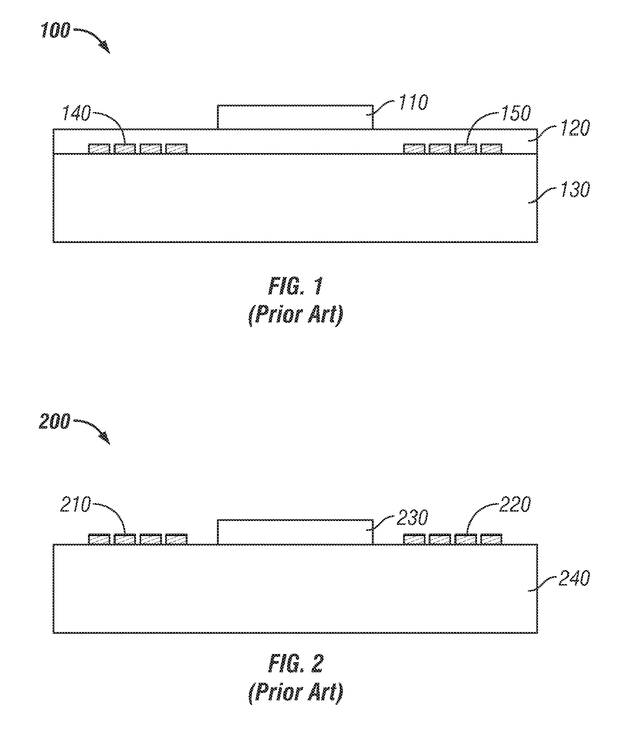

FIG.1 illustrates a perspective view of a prior art LAW-based chemical sensor 100 that includes the use of a guiding layer 120 for acoustic wave propagation. In the prior art LAW based chemical sensor 100 depicted in FIG. 1, the guiding layer 120 is placed on a piezoelectric substrate 130, and on the interdigital transducers (IDT) 140 and 150, which are used for acoustic wave generation and detection by piezoelectric effect. The input IDT 140 and the output IDT 150 are placed on the piezoelectric substrate 130 and covered with the guiding layer 120, which is utilized for acoustic wave propagation. The prior art LAW chemical sensor 100 further includes a sensing layer 110 which can be exposed to a gas, such as air, that contains the chemical substance to be detected. Signals from the sensor 100 can be then analyzed to identify the chemical substance.

FIG. 2 illustrates a perspective view of a prior art SAW chemical sensor 200. The prior art SAW chemical sensor 200 includes an input interdigital transducer 210 and an output interdigital transducer 220, which are placed on a piezoelectric substrate 240 and used for surface acoustic wave generation and detection, by piezoelectric effect. A sensing layer 230 can be utilized to sense an input gas, which is adsorbed on its surface. The acoustic wave generated on the input IDT 210, will propagate under the sensing layer 230 and will change its phase velocity due to adsorbed gases on that sensing layer and thus an electrical signal generated in the output IDT 220 will carry the information about the gas to be detected by the SAW chemical/gas sensor.

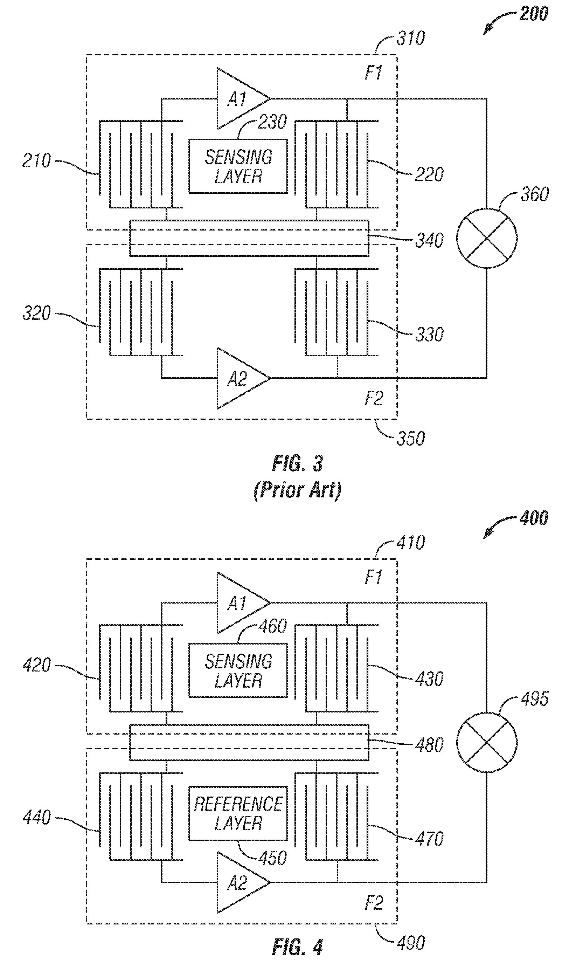

FIG. 3 illustrates a schematic diagram of the prior art SAW/LAW chemical sensor 200. The prior art chemical sensor 200 includes a sensing layer 230, which is located between the input IDT 210 and the output IDT 220. An oscillator-type sensing circuit 310 of the SAW chemical sensor 200 generally includes an RF amplifier A1 with a SAW delay line in its positive feedback loop generating the frequency F1. The above sensing SAW/LAW delay line includes input IDT 210, sensing layer 230 and output IDT 220. The chemical sensor 200 further includes a reference oscillator circuit 350 that utilizes an RF amplifier A2 in association with a reference SAW/LAW delay line in its positive feedback loop oscillating on frequency F2. The above reference SAW/LAW delay line is generally configured from an input IDT 320 and an output IDT 330.

A mixer 360 can be utilized to perform a frequency subtraction between the frequencies F1 and F2. The prior art SAW/LAW chemical sensor 200 additionally includes the use of a ground plane 340, which can be utilized to ground the entire sensing apparatus 200. The difference in frequency F1-F2 carries information regarding a gas to be detected; however, humidity and temperature effects are not entirely eliminated by the prior art differential approaches. This is due to a lack of symmetry of the reference oscillator circuit 350 that constitutes IDT 320, IDT 330 and positive feedback amplifier A2 with respect to a sensing oscillator circuit 310 comprising IDT 210, sensing layer 230, IDT 220 and the positive feedback amplifier A1.

Based on the foregoing, it is believed that a need exists for an improved on-chip low baseline drift SAW/LAW chemical sensor array associated with a reference layer, as described in greater detail herein.

### BRIEF SUMMARY

The following summary is provided to facilitate an understanding of some of the innovative features unique to the embodiments disclosed and is not intended to be a full description. A full appreciation of the various aspects of the embodiments can be gained by taking the entire specification, claims, drawings, and abstract as a whole.

It is, therefore, one aspect of the present invention to provide for an improved SAW/LAW chemical sensor apparatus.

It is another aspect of the present invention to provide for an improved on-chip low baseline drift SAW/LAW chemical sensor array.

It is a further aspect of the present invention to provide for a method for fabricating a SAW/LAW chemical sensor array.

The aforementioned aspects and other objectives and advantages can now be achieved as described herein. An on-chip low baseline drift SAW/LAW chemical sensor array and method of forming the same are disclosed. A dual SAW/LAW delay line includes a common IDT for generating an acoustic wave and a pair of IDT for reception of the acoustic waves. One or more sensing layers and reference layers can be deposited in position on each side of the common IDT. An ASIC chip includes on-chip dual operational amplifiers and a mixer in order to obtain a differential measurement utilizing a difference being given by the sensing and the reference layers. A 3D technology can be employed in order to connect the sensor array and the ASIC in the same package and thereby form a (3D) stack. The chemical sensor array and the ASIC can be configured in different packages and interconnected on the same substrate utilizing 2D technologies. A number of gases can be detected independently and each gas can be detected differentially, with respect to its associated sensing layer and specific reference layer.

The sensor array and the ASIC can also be provided in a different package and interconnected on the same substrate utilizing a 2D technology. The ASIC chip can be further utilized to read output from the SAW sensor array. For such a 2D technology approach, the substrate can include a PCB and the on-chip SAW/LAW sensor array and the ASIC, wherein the said sensor array and the ASIC can be mounted on a PCB utilizing flip-chip (i.e., if the ASIC and the quartz sensor are unpackaged) or surface mounting technologies (i.e., if the quartz sensor and the ASIC are packaged).

For the realization of the sensing apparatus by 3D technology, the quartz wafer and the silicon wafer can be drilled utilizing laser drilling and filled with a metal to form the electrically conductive through-the-quartz-vias (TQV) and/or through-the-silicon vias (TSV), respectively. TQV and TSV components can be further employed to provide electrical connection to the SAW sensor array and ASIC. The reference layer of the SAW/LAW sensor array can be utilized to fill the gap between an input IDT and an output IDT of the reference oscillator circuit. The common IDT can be utilized for generating acoustic waves for both delay lines, wherein one delay line can be configured to contain the sensing layer, and the other delay line configured to contain the reference layer. The disclosed chemical sensor containing on-chip multiple sensing and reference layers can therefore provide a genuine differential gas sensing application and apparatus, in association with the ASIC chip.

### BRIEF DESCRIPTION OF THE DRAWINGS

The accompanying figures, in which like reference numerals refer to identical or functionally similar elements throughout the separate views and which are incorporated in and form a part of the specification, further illustrate the embodiments and, together with the detailed description, serve to explain the embodiments disclosed herein.

FIG. 1 illustrates a front view of a prior art LAW based chemical sensor;

FIG. 2 illustrates a front view of a prior art SAW based chemical sensor;

FIG. 3 illustrates a schematic diagram of a prior art SAW/LAW chemical sensor;

FIG. 4 illustrates a schematic diagram of a SAW/LAW chemical sensor associated with a reference layer for wired applications, which can be implemented in accordance with a preferred embodiment;

FIG. 5 illustrates a schematic diagram of an acoustic wave based wired chemical sensor system for enhanced differential chemical detection, which can be implemented in accordance with a preferred embodiment;

FIG. 6 illustrates a schematic diagram of an acoustic wave based wired gas sensing array, which can be implemented in accordance with a preferred embodiment;

FIG. 7 illustrates a block diagram of a direct printing system for depositing functional layers of the SAW/LAW chemical sensor on a wafer, which can be implemented in accordance with a preferred embodiment;

FIG. 8 illustrates a schematic diagram of a 2D system with a SAW/LAW chemical sensor and an ASIC chip interconnected on a printed circuit board (PCB), which can be implemented in accordance with an alternative embodiment;

FIG. 9 illustrates a schematic diagram of a 3D SAW/LAW chemical sensor array system, which can be implemented in accordance with a preferred embodiment; and

FIG. 10 illustrates a detailed flow chart of operations illustrating a method for fabricating a SAW/LAW chemical sensor array utilizing 3D technology, in accordance with a preferred embodiment.

### DETAILED DESCRIPTION

The particular values and configurations discussed in these non-limiting examples can be varied and are cited merely to illustrate at least one embodiment and are not intended to limit the scope thereof.

FIG.4 illustrates a schematic diagram of a SAW/LAW chemical sensor 400 with a reference layer 450 for wired applications, which can be implemented in accordance with a preferred embodiment. The SAW/LAW chemical sensor 400 includes a sensing oscillator circuit 410 that includes an RF amplifier A1 with a sensing SAW/LAW delay line in the positive feedback loop and the above circuit 410 is oscillating on frequency F1. The above SAW/LAW delay line includes a sensing layer 460 in between an input IDT 420 and an output IDT 430. The sensing layer 460 can be utilized to fill the gap between the input IDT 420 and the IDT 430 of the sensing oscillator circuit 410.

The SAW/LAW chemical sensor 400 further includes a reference oscillator circuit 490 consisting of an RF amplifier A2 with a reference SAW/LAW delay line and a reference non-sensing layer 450 in the positive feedback loop of RF amplifier A1 and the above circuit 490 is oscillating on frequency F2 (reference frequency). The above reference SAW/LAW delay line includes the reference layer 450 in between an input IDT 440 and an output IDT 470 of the reference oscillator circuit 490. The reference layer 450 can be utilized to fill the gap between the input IDT 440 and the output IDT 470. The reference layer 450 can have similar visco-elastic properties as sensing layer 460, but not sensitive to the gas to be detected.

The reference (non-sensing) layer 450 can have the same temperature and humidity behavior as the sensing layer 460. The reference layer 450 can be utilized to obtain symmetry between the sensing oscillator circuit 410 and the reference oscillator circuit 490 of the SAW/LAW chemical sensor 400. A mixer 495 can be utilized to perform frequency subtraction between the frequencies F1 and F2. A differential measurement can be obtained by utilizing two identical amplifiers A1 and A2 and two identical SAW/LAW delay lines (excepting the differences in the functional properties of the two layers) in the feedback loop of the two amplifiers A1 and A2. The reference layer 450 has the same viscoelastic properties and the same response to the temperature and humidity, but no response to the gas to be detected.

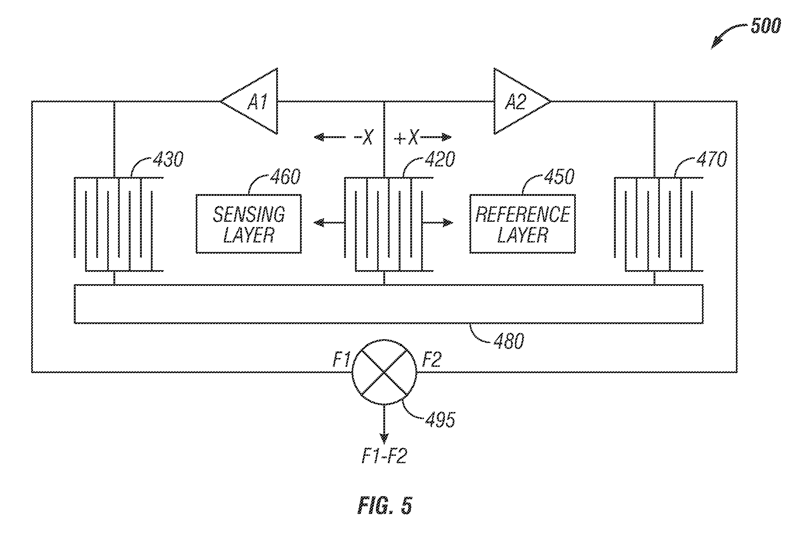

FIG. 5 illustrates a schematic diagram of an acoustic wave based chemical sensor system 500 for wired applications for enhanced differential chemical detection, which can be implemented in accordance with a preferred embodiment. Note that from FIGS. 4-9, identical or similar parts are generally referred with identical reference numerals. The acoustic wave based chemical sensor system 500 includes functional layers such as the sensing layer 460 and the reference layer 450 along with three IDT 430, 420 and 470 to provide enhanced differential chemical detection. The sensor system 500 utilizes the functional layers 460 and 450 and the single common IDT 420 to generate acoustic waves and propagate them in both +X direction and -X direction. The IDT 430 and 470 can be utilized for reception of the acoustic wave.

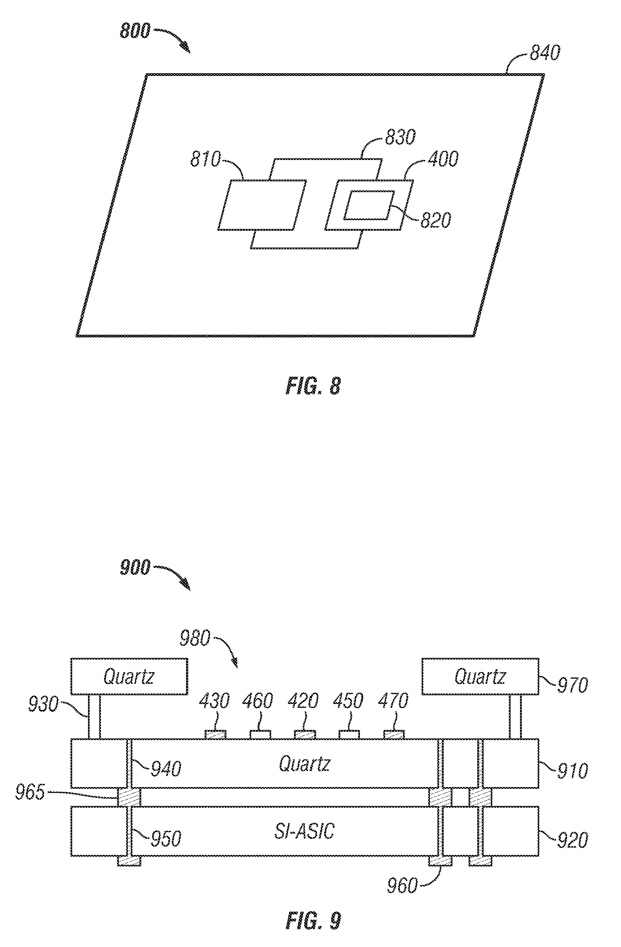

In the positive feed-back loops of the amplifiers A1 and A2 generating the signals F1 and F2, SAW/LAW delay lines are located with acoustic waves propagating in the +X direction and the -X direction. The mixer 495 can be utilized to perform frequency subtraction between the frequencies F1 and F2. The amplifiers A1 and A2 can be well-paired amplifiers so that the same frequency drifts due to aging and temperature dependence of the electronic device can be obtained for A1 and A2. The amplifiers A1 and A2 along with the mixer 495 can be further integrated either on a silicon chip 820 (from FIG. 8) or on a silicon chip 920 (from FIG. 9), thereby forming an ASIC chip for further signal processing.

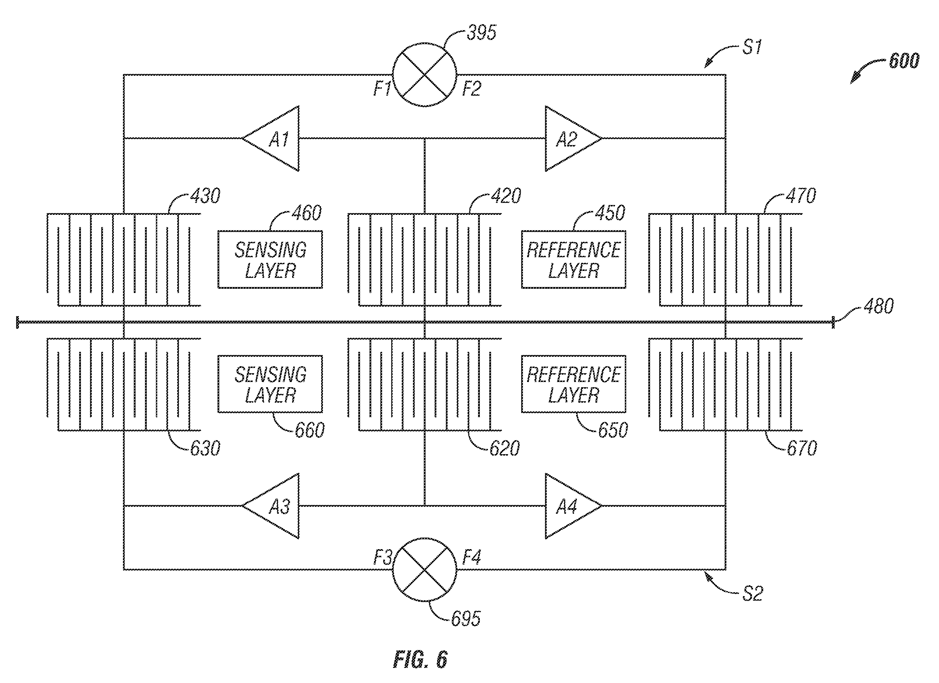

FIG. 6 illustrates a schematic diagram of an acoustic wave based wired gas sensing array 600, which can be implemented in accordance with a preferred embodiment. The gas-sensing array 600 includes two dedicated differential SAW/LAW chemical sensor S1 and S2, which can be utilized to detect two gas inputs in parallel. Note that the embodiments discussed herein generally relate to sensors for sensing two gases. It can be appreciated, however, that such embodiments can be implemented for sensing multi-gas with dedicated sensing and reference layer for each gas. The sensor S1 includes a sensing layer 460 and a reference layer 450, which can be incorporated between the IDT's 430, 420 and 470.

The amplifiers A1 and A2 of the sensor S1 can be utilized to generate electrical oscillations with frequencies F1 and F2 based on the acoustic signals generated by the IDT 420, which are then converted back to electrical signals by the IDT 430 and 470 located in the (positive) feed-back loops of the two oscillators (i.e., one sensing oscillator containing amplifier A1 and IDT 420 and 430 and the sensing layer 460 and one reference oscillator containing amplifier A2 and IDT 420 and 470 and the reference layer 450) thus formed. The mixer 395 can be utilized to perform frequency subtraction between the frequencies F1 and F2. Similarly, the sensor S2 includes another sensing layer 660 and a reference layer 650, which can be incorporated between IDT's 630, 620 and 670. The sensors S1 and S2 together can form a sensor array, wherein each sensor of the sensor array possesses its own reference layer and associated circuitry. In a similar manner, more differential sensors (S1, S2...Sn) can be located on the same chip, thereby providing for a large SAW/LAW chemical sensor array configuration.

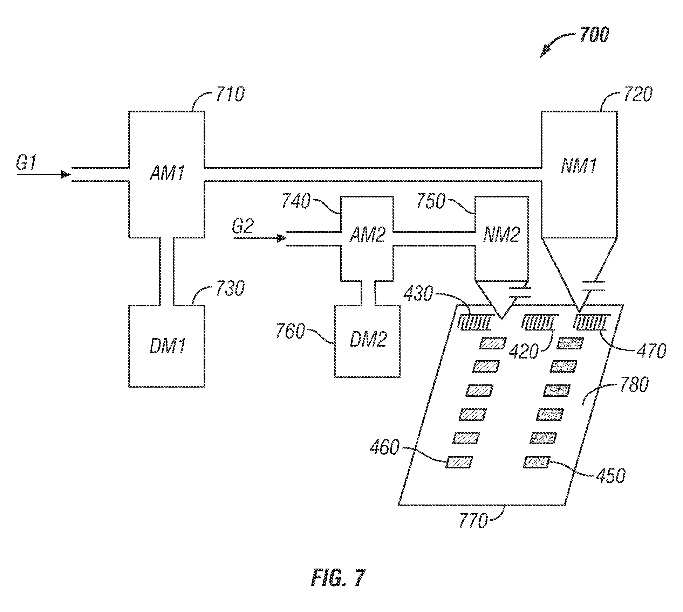

The amplifiers A3 and A4 of the sensor S2 can be utilized to generate electrical oscillations with frequencies F3 and F4 based on the acoustic signals generated by the IDT 620, which are converted back to electrical signals by the IDT 630 and 670 located on the feed-back loops of the other two oscillators (i.e., one sensing oscillator containing amplifier A3 and IDT 620 and 630 and the sensing layer 660 and one reference oscillator containing amplifier A4 and IDT 620 and 670 and the reference layer 650) thus formed. A mixer 695 can be utilized to perform frequency subtraction between the frequencies F3 and F4. The functional layers of the SAW/LAW chemical sensor 600 can be selective and mask-less deposited by utilizing a direct printing system 700, as illustrated at FIG. 7. The IDT's, the sensing layer and the reference layers of the chemical sensor S1 and S2 can be placed on the same piezoelectric chip (e.g., an example of on-chip SAW/LAW chemical sensor array), while the mixers and amplifiers can be placed on a separate chip (ASIC), but together packaged in a same (3D) stack in order to form a 3D integrated sensing system 900 (see FIG. 9). Similarly, the IDT's, the sensing layers and reference layers can be placed on the same chip (forming thus an on-chip SAW/LAW chemical sensor array), while the mixers and amplifiers can be placed on a separate ASIC chip, but lying together on the same surface substrate in order to form a 2D hybrid system 800 (see FIG 8).

FIG. 7 illustrates a block diagram of a direct printing system 700 which can be utilized for depositing functional layers 450 and 460 of the SAW/LAW chemical sensors 400, 500 and 600 on a wafer 770, in accordance with a preferred embodiment. The direct printing system 700 can be utilized to place a number of sensing layers 460 in between IDT 420 and 430 of the sensing oscillator circuits built around the amplifier A1's of the SAW/LAW sensor system 500 from FIG. 5, all these sensing layers being mask-less deposited on the quartz wafer 770. Similarly, a number of reference layers 450 can be placed between IDT 420 and 470 of the reference oscillator circuits built around the amplifiers of type A2, all these reference layers being mask-less deposited on the quartz wafer 770. For the disclosed embodiment, the direct printing system 700 constitutes a dual-head direct printing system wherein each type of liquid solution utilizes its own distribution system for local, selective and additive deposition with respect to the liquid phase of the particular material.

The homogeneous liquid phase of each solution can be prepared by chemical synthesis. The quartz wafer 770 can be cleaned before liquid phase deposition. An input gas G1 can be passed through a first atomizer module 710. The input gas G1 further flows through a first deposition material (DM1) module 730 to generate an atomized liquid solution. The atomized liquid solution can be utilized to generate multiple reference layers 450 on the wafer 770 through a first nozzle module (NM1) 720 by additive deposition in the right place on the wafer 770. Another input gas G2 can be passed through a second atomizer module (AM2) 740 to get processed by a second deposition module (DM2) 760 to generate an atomized liquid solution.

The atomized liquid solution can be further utilized to generate multiple sensing layers 460 on the wafer 770 through a second nozzle module (NM2) 750 by additive deposition in the right place on the wafer 770. Thereafter, the transition from liquid to gel phase of the functionalized layers 450 and 460 can be carried out at the end of deposition of the liquid phase on the surface. The gel layer can then be dried for solvent removal from the gel layer. The gel layer can be thermally consolidated in order to obtain a functionalized thin solid film.

FIG. 8 illustrates a perspective view of a two-dimensional (2D) system 800 that can incorporate any of the SAW/LAW chemical sensors 400, 500 and/or 600 described previously, along with a corresponding ASIC chip 810 interconnected on a printed circuit board 840, in accordance with an alternative embodiment. For simplicity, and as an example, the example illustration of FIG. 8 depicts the use of SAW/LAW chemical sensor 400 and its associated ASIC (see FIG. 4). The SAW/LAW chemical sensor 400 and the ASIC chip 810 can be configured in a different package and interconnected on the same substrate 840 utilizing 2D technology. The sensor 400 and the ASIC chip 810 can be connected to the substrate 840 utilizing, for example, flip-chip and/or surface mounting technologies.

The SAW/LAW chemical sensor 400, which includes the sensing layers 460 and the reference layers 450, can be utilized for differential gas sensing. The SAW/LAW chemical sensor apparatus 400 can also be utilized to detect one or more gases by means of a SAW/LAW principle utilizing a single sensing chip, as disclosed in FIG. 6. The SAW/LAW chemical sensor 400 can be configured to include a window 820 which can be utilized to allow the ambient gas to access the sensing layers 460 while gas detection. The ASIC chip 810 can be utilized to read the output of the SAW/LAW chemical sensor 400. The ASIC chip 810 and the SAW/LAW chemical sensor 400 can be interconnected on the printed circuit board (PCB) 840 utilizing an electrical connection 830. Again, it can be appreciated that sensors 500 or 600 can be implemented in place of sensor 400 in order to configure alternative embodiments.

FIG. 9 illustrates a schematic cross view diagram of a three-dimensional (3D) SAW/LAW chemical sensor system 900 with any of the SAW/LAW chemical sensor 400, 500, 600 and its associated ASIC chip 810 (not shown in FIG. 9) electrically interconnected on-3D chip utilizing through quartz and silicon conducting vias, which can be implemented in accordance with a preferred embodiment. As an example, we disclose here the on-3D chip system interconnecting technology for the SAW/LAW chemical system 500 from FIG. 5. A SAW/LAW wafer such as a quartz wafer 910 can be processed for 3D technology by fabricating (depositing metal layers, or electrically conductive material) wafer level metal bumps such as metal bump 965 on the backside of the quartz wafer 910.

As an example of vias fabrication, laser drilling can be performed on the quartz wafer 910 to form a through-the quartz-hole that will finally become a through-the quartz-electrically conductive vias (TQV) 940, by metal filling of the hole performed with the laser. A cover wafer 970 can be processed by fabricating trenches as deep as 50 microns by means of mechanical/laser drilling or chemical etching in the regions of future dicing of the cover wafer 970 and the quartz wafer 910 for tandem singulation. The dimensions are described for purposes of clarity and specificity; however, they should not be interpreted in any limiting way. Other dimensions are possible.

Thereafter, a hole 980 can be fabricated in the cover wafer 970 to let ambient access to the sensing layer 460 and the reference layer 450 of the SAW sensor 500 by mechanical or laser drilling or chemical etching. However, other types of technologies can be utilized for drilling without departing from the scope of the invention. A wafer level bonding can then be performed between the SAW quartz wafer 910 and the cover wafer 970 utilizing a liquid phase glass frit 930. Selective, mask-less deposition on the cover wafer of the liquid phase of the bonding material, for example, glass frit, by direct printing method is disclosed here, followed by drying and consolidation of the bonding glass.

Traditional selective deposition of glass frit by screen printing can be also used as an alternative for the same purpose. However, other types of bonding technologies, like adhesive bonding can be utilized for bonding the cover wafer to quartz wafer, without departing from the scope of the invention. The SAW quartz wafer 910, glass frit 930 and the cover wafer 970 can be maintained at equal thermal expansion coefficient. A silicon wafer 920, which includes an ASIC chip 810, can be processed for 3D packaging by fabricating (e.g., depositing metal layers) wafer level metal bumps (e.g., metal bump 960) on the backside of a silicon wafer 920.

The silicon wafer 920 can be drilled utilizing laser drilling followed by vias filling with metal to form a through the silicon vias (TSV) 950 for electrical connection to ASIC 810. The quartz wafer 910 can be bonded to the silicon wafer 920 so that the metal bumps 965 of the quartz wafer 910 make mechanical and electrical contact to the metal bump 960 of the silicon wafer, which are located on both sides of the silicon wafer. A number of sensing layers 460 and reference layers 450 can be deposited on the quartz wafer 910 with multiple injection heads, each of which are located in the correct place, by the proper injection head utilizing direct a printing method, as depicted in FIG. 7. The entire 3D SAW chemical sensor array 900 can be diced into many (e.g., hundreds) of 3D sensor chips containing a sensor array associated with electronics. The diced 3D sensor chips 900 can be further bonded on a PCB by utilizing standard flip chip technology.

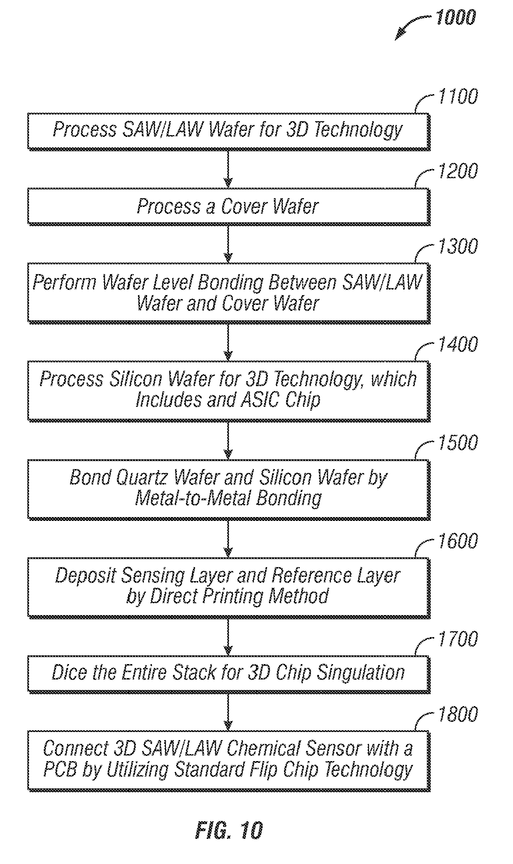

FIG. 10 illustrates a detailed flow chart of operations 1000 illustrating a method for fabricating a 3D SAW/LAW chemical sensor array system utilizing 3D technology, in accordance with a preferred embodiment. Note that such a SAW/LAW sensor array can include the use of a dedicated sensing layer and a dedicated reference layer for sensing multiples gases independently and detecting varying gases differentially, thereby providing the SAW/LAW sensor array, either using a multi-chip sensor array (where each independent chip of the array has only one type of functionalized layer, either the sensing layer or the reference layer), or with on-chip realization (where all the sensing and reference layers are located on the same chip) for low baseline drift properties.

In general, a quartz wafer 910 can be 3D-processed at the front end or the back end for 3D technology by fabricating metal bumps, such as metal bump 965 on back side of the quartz wafer 910, as depicted at block 1100. A cover wafer 970 can be processed by fabricating trenches as deep as 50 microns by means of mechanical/laser drilling or chemical etching in the regions of future dicing of the cover wafer 970 and the quartz wafer 910 for tandem singulation, as shown at block 1200.

Later, a hole 980 can be perforated on the cover wafer 970 which can provide access to the sensing layer 460. Thereafter, as shown at block 1300, wafer level bonding can be performed between the SAW quartz wafer 910 and cover wafer 970 utilizing the liquid phase glass frit, which after thermal consolidation becomes the glass frit spacer 930. A silicon wafer 920 which includes an ASIC chip 810 can be 3D-processed at front-end or back-end by fabricating metal bumps on both sides such as metal bump 960 on the back side of a silicon wafer 920, as shown at block 1400.

The silicon wafer 920 and the quartz wafer 910 can be bonded utilizing metal-to-metal bonding 965, as illustrated at block 1500. Thereafter, as indicated at block 1600, a number of sensing layers 460 and reference layers 450 can be deposited on the quartz layer 910 utilizing a direct printing method, as depicted in FIG. 7. The entire 3D SAW chemical sensor array system 900 can then be diced into many (e.g., hundreds) of 3D sensor chips containing a sensor array associated with the ASIC chip 810, as illustrated at block 1700. The diced 3D sensor chip 900 can be further bonded on a PCB chip 840 by utilizing standard flip chip technology, as indicated at block 1800. A common IDT 420 can be utilized for generating acoustic waves to be utilized by both delay lines containing the sensing layer 460 and the delay line containing the reference layer 450. Similarly, two gases can be detected independently and each gas will be detected differentially by having its sensing layers 460 and 660 and its specific reference layers 450 and 650, as in the case of SAW/LAW chemical sensor array 600.

It will be appreciated that variations of the above-disclosed and other features and functions, or alternatives thereof, may be desirably combined into many other different systems or applications. Also, that various presently unforeseen or unanticipated alternatives, modifications, variations or improvements therein may be subsequently made by those skilled in the art which are also intended to be encompassed by the following claims.

## Claims

1. A low drift chemical sensor array apparatus, comprising:
a plurality of SAW/LAW delay lines comprising a plurality of interdigital transducers, including at least a common interdigital transducer for generating an acoustic wave and a pair of interdigital transducers for reception of said acoustic wave, wherein each delay line among said plurality of SAW/LAW delay lines includes one sensing layer or one reference layer on each side of said common interdigital transducer; and
an ASIC component comprising a plurality of operational amplifiers, wherein each operational amplifier among said plurality of operational amplifiers includes a positive feedback loop and contains within said positive feedback loop one SAW/LAW delay line among said plurality of SAW/LAW delay lines and said ASIC component further comprises a plurality of mixers, wherein each mixer among said plurality of mixers is used to obtain a gas differential measurement utilizing a frequency difference by subtracting frequencies from two operational amplifiers among said plurality of operational amplifiers per each gas to be detected from among a plurality of gases that come into contact with said low drift chemical sensor array apparatus separately or simultaneously.

2. The apparatus of claim 1 wherein each operational amplifier among said plurality of operational amplifiers contains a SAW/LAW delay line in said positive feedback loop from among said plurality of SAW/LAW delay lines and wherein each SAW/LAW delay line among said plurality of SAW/LAW delay lines includes said one sensing layer or said one reference layer located in a space formed between each two interdigital transducers of a said SAW/LAW delay line among said plurality of SAW/LAW delay lines.

3. The apparatus of claim 1 further comprising at least one piezoelectric substrate for depositing said at least one sensing layer and said at least one reference layer utilizing a direct printing method associated with multiple injection heads.

4. The apparatus of claim 1 wherein said at least one reference layer possess common viscoelastic properties and an equivalent response to temperature and humidity, but no response to said gas to be detected.

5. The apparatus of claim 1 further comprising a SAW/LAW sensor array comprising a dedicated sensing layer and a dedicated reference layer for sensing differentially and independently each gas of a multi-gas ambient, thereby providing said SAW/LAW sensor array.

6. A low drift chemical sensor array apparatus, comprising:
a plurality of SAW/LAW delay lines, wherein said plurality of SAW delay lines comprises separate interdigital transducers and wherein each SAW/LAW delay line among said plurality of SAW/LAW delay lines includes a space between two separate interdigital transducers, a sensing layer or a reference layer; and
an ASIC chip comprising a plurality of operational amplifiers integrated on a chip, wherein each operational amplifier among said plurality of operational amplifiers includes a positive feedback loop with respect to one SAW/LAW delay line among said plurality of SAW/LAW delay lines and wherein said ASIC component further comprises a plurality of mixers, wherein each mixer among said plurality of mixers is utilized to obtain a gas differential measurement, wherein each gas to be detected is measured by a frequency difference provided via one mixer among said plurality of mixers by subtracting frequencies from two operational amplifiers among said plurality of operational amplifiers.

7. The apparatus of claim 6 further comprising a sensing layer and a reference layer, wherein each of said layers are located in said space between said separate interdigital transducers of said SAW/LAW delay line.

8. The apparatus from claim 6 wherein a SAW/LAW delay line containing said sensing layer among said plurality of SAW/LAW delay lines and a SAW/LAW delay line among said plurality of SAW/LAW delay lines containing said reference layer are located on separate chips.

9. A method for 3D fabrication of a chemical sensor array, comprising:
depositing at least one sensing layer and at least one reference layer exactly in a position on a substrate in order to form a sensor array utilizing direct printing, wherein said at least one reference layer possesses the same visco-elastic properties as said at least one sensing layer having no sensing properties thereof;
interconnecting an ASIC chip with said substrate and said at least one sensing layer and said at least one reference layer by metal-to-metal bonding through at least one conducting via in order to provide a mechanical and electrical contact between said substrate and said ASIC chip; and
configuring a cover to allow a gas access to at least one sensing layer and at least a reference layer to provide said sensor array, which includes said at least one sensing layer, said at least one reference layer, and said ASIC chip.

10. A method for 2D fabrication of a chemical sensor array, said method comprising:
connecting a chemical sensor array and an ASIC chip in different packages thereof utilizing 2D technology; and
interconnecting said chemical sensor array and said ASIC chip on a substrate.
